# EUROPEAN PATENT APPLICATION

(11) **EP 1 099 599 A1**
(43) Date of publication of application: **16.05.2001**
(21) Application number: 99915763.9
(22) Date of filing: 27.04.1999
(51) Int. Cl.: B60P 7/08, B61D 45/00

(54) **LOAD FIXING DEVICE FOR TRUCKS, TRAILERS, SEMI-TRAILERS, ISOTHERMAL UNITS, REFRIGERATING UNITS, CONTAINERS, WAGONS, ETC., APPLICABLE TO THE TRANSPORT OF GOODS**

(30) Priority: 28.07.1998 ES 9801594
(71) Applicant: Manso Ferro, Gonzalo, 28053 Madrid (ES)
(72) Inventor: Manso Ferro, Gonzalo, 28053 Madrid (ES)
(74) Representative: Botella Reyna, Antonio
(86) International application number: ES9900110
(87) International publication number: WO0006418

(57) **Abstract**

Load fixing device for trucks, trailers, semi-trailers, isothermal units, refrigerating units, containers, train wagons, etc. applicable to the transport of goods (1), comprising a device intended to be used as a load fixing system in order to impede the load to move. The device has load fixing bars (2) which are fixed along the body of' the truck, trailer or the like; a motionless or mobile fixing device (8) is joined to two consecutive bars. The load fixing device can be moved along the body through rails or guides (9) by means of sliding or rolling devices (4) to which are incorporated the arms or straps (3) of the load fixing device. When the load fixing device is not in use, it will be stored by means of a coupling intended for this purpose inside the body of the vehicle or unit.

## Description

### OBJECT OF THE INVENTION

The present specification relates to a patent in reference to a load fixation device for trucks, trailers, semitrailers, isothermous lorries, refrigerator lorries containers, wagons, etc. applicable to goods transportation, which obvious object is to set up a load fixation system with the purpose of preventing its movement having fixation bars linked between each other by means of stretching mechanism and, at the same time, by means of a fixation device; such device is moved all along the bodywork through rails or guide elements by means of some fixation arms of the device, which will have some sliding devices built in. When the load fixation device is not in use, it will be retrieved in a coupling, made for such purpose, inside of the bodywork.

### FIELD OF THE INVENTION

This invention is to be applied within the industrial sector dealing with the manufacturing of bodywork and fixation devices for trucks, trailers, semitrailers, isothermous lorries, refrigerator lorries, train wagons, etc. applicable to goods transportation.

### DESCRIPTION OF THE INVENTION

Specifically, the load fixation device for trucks, trailers, semitrailers, isothermous lorries, refrigerator lorries, containers, train wagons, etc. applicable to goods transportation, is set up with arms which are coupled in the internal part and, preferably in the upper part of the bodywork. Some sliding devices are incorporated at the end of such arms with the purpose of being able to move along the bodywork; for this reason if the device has a horizontal fixation in the upper part of the bodywork, guide elements or rails are installed. These guides can be installed in the lateral parts, provided that the device has vertical fixation. To such arms a fixation bar is attached which is coupled by both sides in some fixation elements that will be placed along the bodywork; to this first bar stretching and retrieval mechanisms are coupled, to which is linked another fixation bar that, in a similar way to the first one, will be held to the lateral fixation elements by means of pressure devices. More fixation bars can be coupled if desired. From one bar to the other a load fixation device will be installed, that can be rigid, flexible, displaceable, etc. Some closing or hooking mechanisms will be coupled to the fixation device with the purpose of fixing such load fixation device to a coupling that the bodywork has inside to retrieve it when it is not in use; in order to facilitate this work, the device will be provided, if desire, with some springs or shock absorbers which will be retrieved mechanically and without effort, it will also be provided with a retracting dragbar when the coupling is installed on the roof and it cannot be reached easily.

### DESCRIPTION OF THE DRAWINGS

In order to complete the description which is being carried out and for a better knowledge of the invention characteristics, four sheets of drawings are accompanying the present specification, as an integral part thereof, in which, with illustrative and not limiting character, the following figures have been represented:
Figure number 1 is a view of the object of the invention relating to a load fixation device for trucks, trailers, semitrailers, isothermous lorries, refrigerator lorries, containers, train wagons, etc. applicable to goods transportation with an internal, rigid, displaceable, fixation device completely mounted.
Figure number 2 is a view of the object of the invention completely mounted on a bodywork.
Figure number 3 is a view of the object of the invention relating to a load fixation device with stretching and retrieval mechanisms, as well as with an interior load fixation device with flexible tension, completely mounted.
Figure number 4 is a view of a slidable, extendible fixation bar, with its corresponding displacement and fixation guide elements.
Figure number 5 is a view of a fixation bar with a passing and fixation device of a tension band.
Figure number 6 is a view of a roll-up, insulating device that maintains the temperature.
Figure number 7 is a view of the object of the invention relating to a fixation device with pushing or tensioning devices mounted to facilitate the rotation and at the same time the retrieval of the device.
Figure number 8 is a view of the object of the invention in relation to a load fixation device in vertical position with displacement on lateral guides completely mounted.

### PREFERRED EMBODIMENT OF THE INVENTION

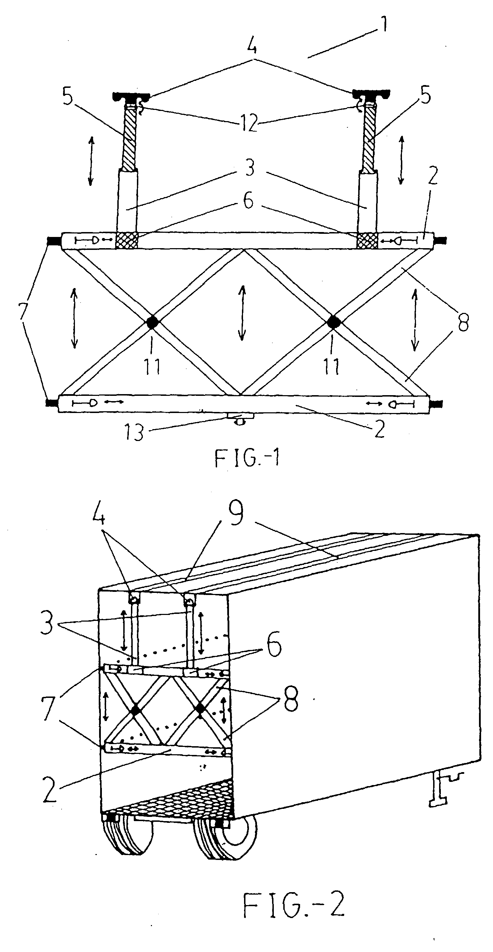

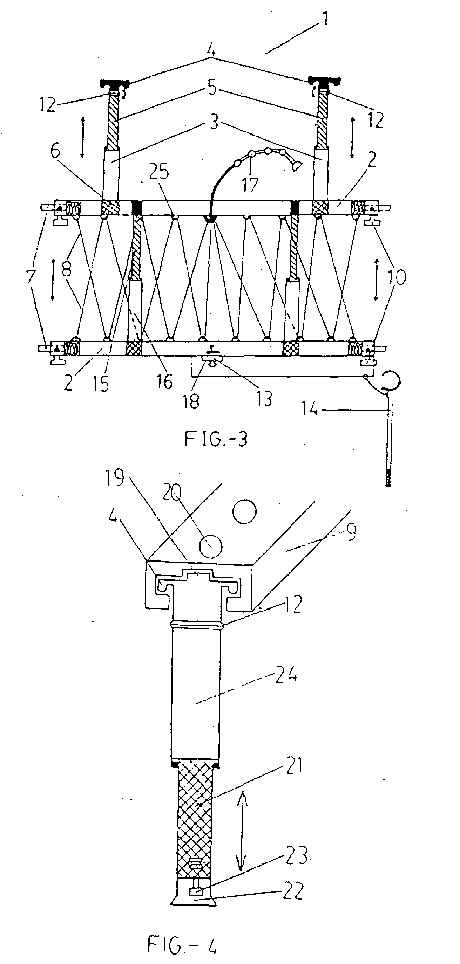

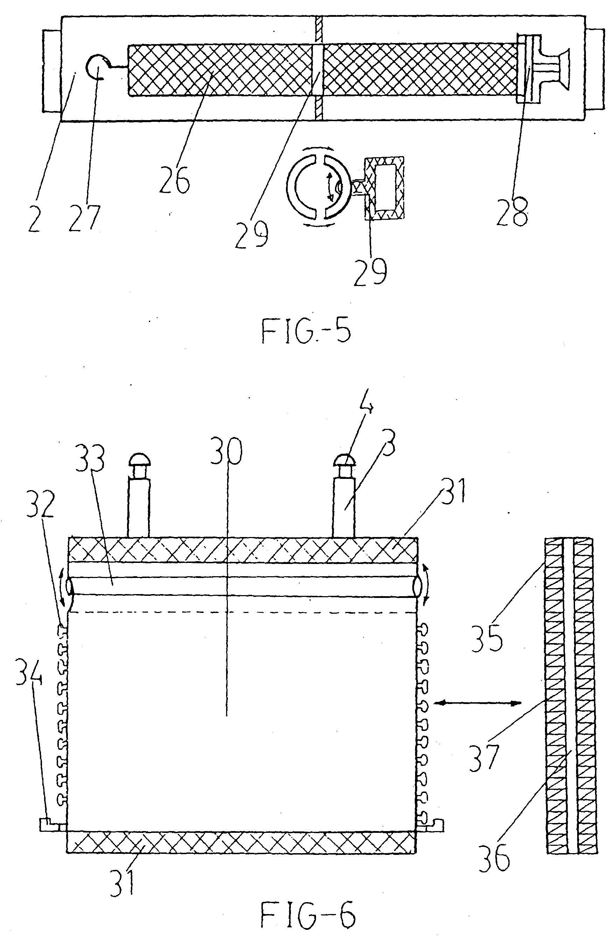

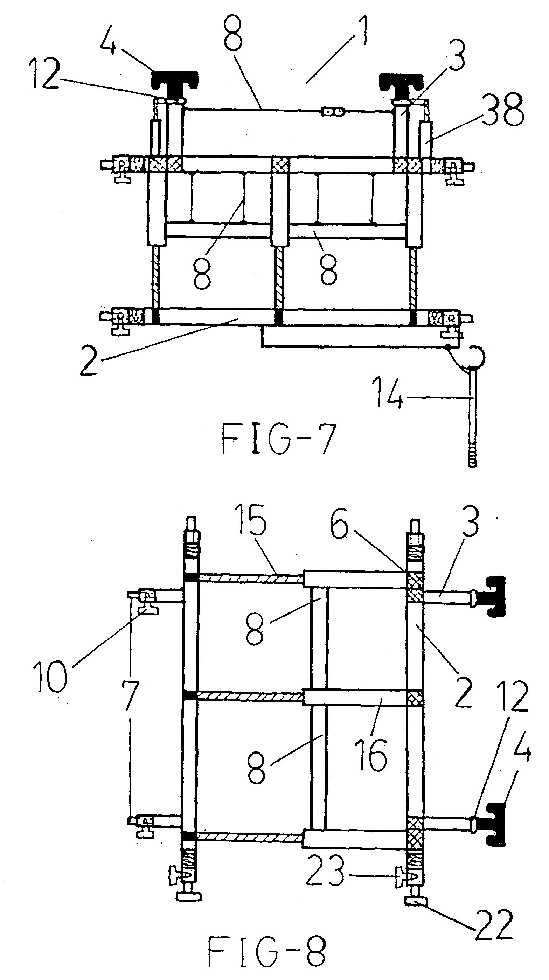

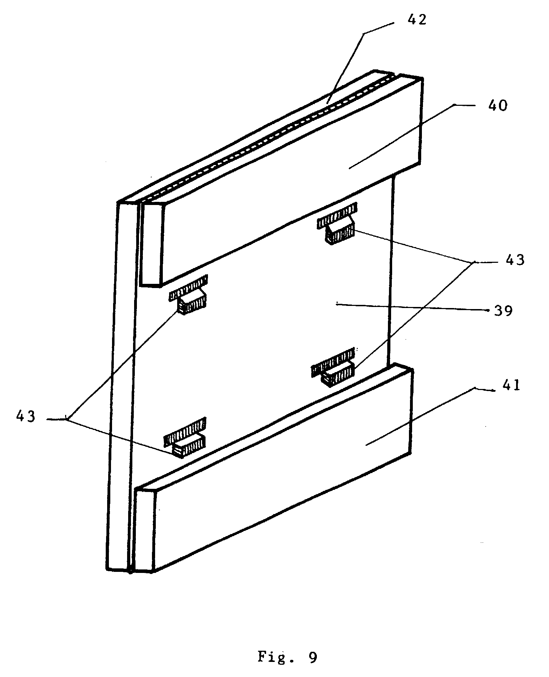

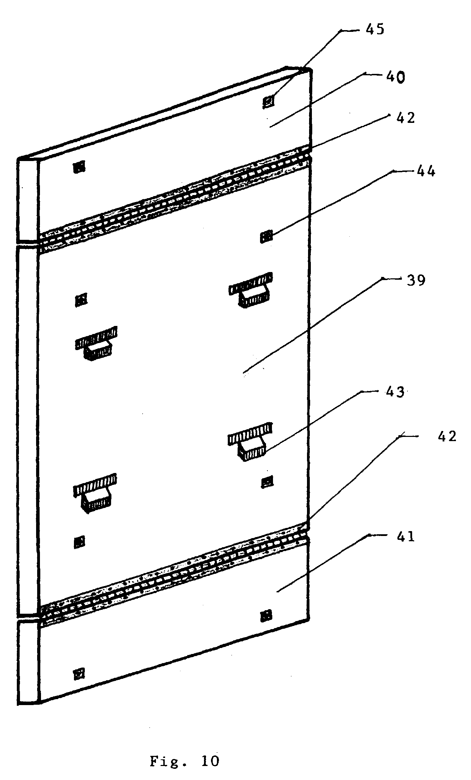

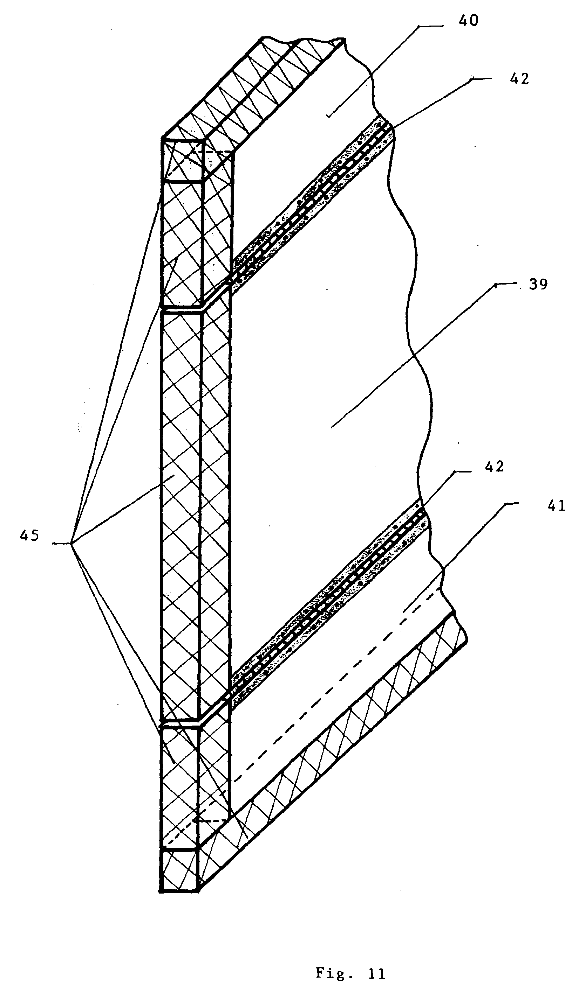

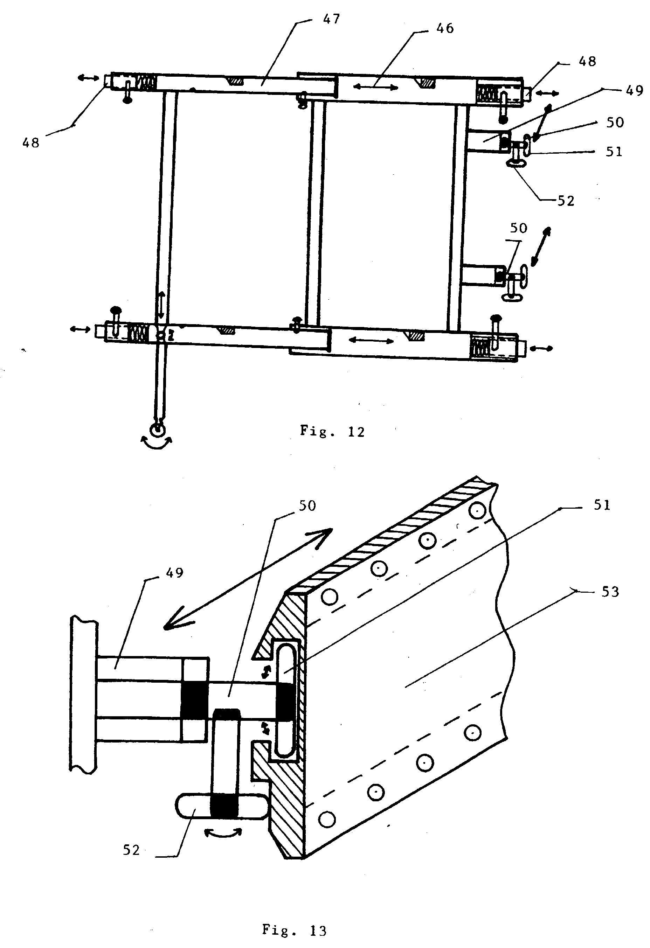

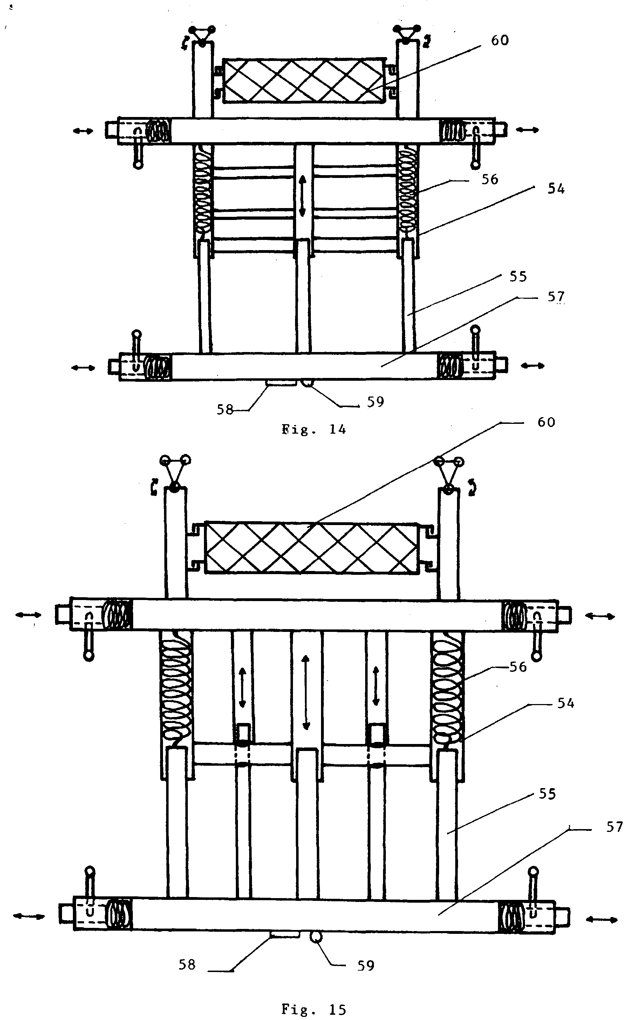

According to Figure 1, it can be seen in which way the load fixation device for trucks, trailers, semitrailers, isothermous lorries, refrigerator lorries, containers, train wagons, etc. applicable to goods **(1)** transportation is set up with load fixation bars **(2)**, in which ends are attached some fixation devices **(7)**. From one bar **(2)** to the other a secured fixation device **(8)** is linked, displaceable by means of a rotating device **(11)**; from the fixation bar some arms or steel strips **(3)** are attached by means of fixation elements **(6)** in which ends some sliding devices **(4)** are coupled, and at the same time, some rotating or inclination devices **(12)** having the purpose of facilitating their retrieval. Likewise, such steel strips or arms **(3)** have incorporated, if desired, another inner displaceable arm, or stretching mechanism **(5)**. For securing the fixation device, in its retrieval, it is provided with a closing or hooking mechanism **(13)**.

A load fixation device **(1)** can be seen in Figure number 2, set up with arms **(3)** to which a fixation bar **(2)** is attached, by means of the fixation elements **(6)**, which in both ends will have some fixation couplings **(7)** which are inserted in the fixation elements that the bodywork is provided with for such purpose. From this first fixation bar **(2)** it is attached, at the same time, a stretching and a load fixation mechanism **(8)**, to which, in its turn, a fixation bar **(2)** is linked. Such load fixation device **(1)** is moving along the bodywork through some rails or guide elements **(9)** by means of some sliding or bearing devices **(4)** that will have incorporated the arms or steel strips.

In Figure number 3, it is seen in which way the load fixation device for trucks, trailers, semitrailers, isothermous lorries, refrigerator lorries, containers, train wagons, etc. applicable to good **(1)** transportation, is set up with load fixation bars **(2)** in which ends some fixation **(7)** or pressure **(10)** devices are attached. From one fixation bar **(2)** to the other, some fixation devices **(16)** and at the same time some stretching or elongation devices **(15)** are linked. The load fixation device **(1)** has a movable load fixation device **(8)** as an integral part thereof that can be resilient, cord type, etc., for that purpose each fixation bar **(2)** has some pins or rollers **(25)** as an integral part thereof. The fixation device **(8)** is provided with some fixation elements **(17)** which are secured to a coupling device **(18)** for tensioning thereof; from the upper bar some fixation mechanisms **(6)** or welding are attached to which some steel strips or arms **(3)** are linked with a stretching device **(5)**; such arms are provided with a rotating or inclination device **(12)** to facilitate its mobility and at the same its retrieval, having coupled tension devices **(38)** (springs, shock absorbers, etc.) intended for facilitating its retrieval in a coupling made for such purpose and being able to secure it by means of closing or hooking mechanism **(13)**. The arms or steel strips **(3)** have in their ends some sliding or roller devices **(4)** with the purpose of displacing the load fixation device **(1)** along the bodywork, refrigerator lorries, wagon, etc. The load fixation device **(1)** when is retrieved in the upper part of the bodywork, container, etc. is provided with a rotating device or bar **(14)** for easily hooking and unhooking it.

In Figure number 4, it is seen a displaceable fixation device for trucks, trailers, semitrailers, isothermous lorries, refrigerator lorries, containers, train wagons, etc. applicable to goods transportation set up with a load fixation bar **(24**) with fixable elongator and retriever **(21)** in which end a fixation device **(22)** is provided with tension or spring device **(23)**. Such load fixation device **(24)** has a rotating or inclination device **(12)** to facilitate its mobility and at the same time its retrieval, similarly being able to secure it and being provided with a spring or shock absorber to be able to facilitate its retrieval in its coupling made for such purpose and being able to secure it by means of a closing or hooking device **(13)**. To facilitate its displacement, it is provided in its ends, some sliding devices or rollers **(4)** sliding or displacing on a rail or guide **(9)** which has all along as integral part thereof, some couplings or fixation elements **(20)** with the purpose of being able to secure the load fixation device **(24)** at this end by means of a fixation device **(19)** that such device **(24)** has incorporated to prevent its mobility when it is in use.

In Figure number 5, it can be seen a load fixation bar **(2)** in which it can be coupled, both secure and dismountable, a rotating fixation device that will have coupled a tensioning device **(28)** and a fixation device **(27)**, with the purpose of securing and holding a pallet or an uneven load in a bodywork when the load fixation device **(1)** is installed on the front part holding the even load.

In Figure number 6, it can be seen a device for keeping and maintaining the temperature, set up with some arms or steel strips (3) in which ends are coupled some sliding devices **(4)**. From such arms a roll up or rotating roller device **(33)** is attached to which an insulating fabric, rubber **(30)** etc. is rolled and unrolled, in which lateral sides are incorporated some clasps, zipper **(32)**, etc. with the purpose of securing it to some rails or fixation devices **(35)** which the walls of the bodywork will have coupled. Such devices **(35)** are provided with passing guide elements **(36)** and with a pushing device or temperature insulator **(37)**; with the purpose of securing or closing the device, it will be provided with some fixation or closing devices **(34)**. Likewise, to prevent leaks of temperature through the ends, they are provided with a pressure insulating element **(31)**.

In Figure number 7, it can be seen a load fixation device, applicable to goods **(1)** transportation set up with a tension or pushing device **(38)** (shock absorbers, springs, etc.) to facilitate its mobility and retrieval.

In Figure number 8, it can be seen a load fixation device for trucks, trailers, semitrailers isothermous lorries, refrigerator lorries, containers, train wagons, etc. applicable to goods **(1)** transportation, set up with some sliding devices **(4)** which slide, or displace on a lateral guide **(9)** being a vertical load fixation device **(1)**.

In Figures 9, 10 and 11, the existence of some cold separation panels are detailed, susceptible of being placed on the load fixation device, these panels are formed by central area **(39)** and two bands, an upper one **(40)** and a lower one **(41)** narrower than the central one, and they are articulated to this one by systems of hinges **(42)**, to allow the folding up of these areas over the central one, decreasing the total height of the panel, to allow the movement thereof during the operations of positioning, without neither rubbing the roof nor the floor. These panels have in their edges all along their periphery, some profiles **(45)** of insulating and resilient material, that when the panel is placed in the corresponding location, it assures a total sealing in the chamber formed by them, intended for goods which require absolute isothermic conditions.

For the fixation of the panel to the corresponding load fixation device, some hooking elements **(43)** are placed in the surface of the central area on the horizontal bars of such device, also existing other hooking means **(44)** which coincide with other ones **(45)** located on the folding bands (**40** and **41**) to hold them when they are in folded position.

In Figure 12, an alternative of the load fixation device is detailed, in which are used as horizontal bars some telescopic elements **(46)** which inner bar **(47)** slides to obtain in each case the appropriate length according to the width of the concerned vehicle, providing at the ends, two slip bolts **(48)** with spring and slip bolts to assure the hooking in the adequate point in each case.

In one of the transversal bars of the corresponding end some pieces **(49)** are fixed having in their ends some trolleys **(50)** equipped with bearings or rollers, some of them in vertical position **(51)** and some others in horizontal position **(52)** which are provided for sliding on guide elements **(53)** that are foreseen in the internal lateral surface of the concerned vehicle which guide elements have an internal rail by which the vertical bearing **(51)** slides and another external track, over which the horizontal bearing **(52)** is supported, allowing that the movement along the vehicle not only takes place by the upper guide, but also over the lateral ones, obtaining a more complete and correct movement. In Figure 13, it is detailed to the maximum the shaping of the trolleys **(50)** and the profile of the new lateral guide **(53)**.

In Figure 14 and 15 the load fixation devices are represented, in which the lower area has been modified, changing the load device **(8)** of cord, resilient elements, etc., extending the vertical bars **(3)** by other hollow bars **(54)**, within which other ones **(55)** telecopically moved, maintain the maximum extended position by means of some springs **(56)**, so that when it is in full use, the lower bar **(57)** is in contact with the floor of the vehicle, providing a slip bolt or hook **(58)** for its fixation, both in use, as in the retrieval position, which has been foreseen, either by means of a cord or tie linked to a ring **(59)** that passes through an upper and lateral pulley system, applying traction to this lateral element, producing the swivel-mounted movement which allows to place the device back to the roof of the vehicle where there is another means of fixation for the slip bolt **(58)** which also in turn can be driven by another cord taking advantage of the same above mentioned pulley system. For a perfect fixation of the load, some grid **(60)** panels are included both in the upper area and in the lower one, that can be placed by simple hanging them on the existing hooks of the lateral vertical bars of the device.

The rail **(9)** of the vehicle upper area preferably has an arcuate channel profile for a better sliding of the bearing which moves inside thereof.

It is not necessary to make this description more extensive, so that any of those skilled in the art understand the scope of this invention and the advantages derived thereof. The materials, shape, size and disposition of the elements will be subject to changes, provided that this do not suppose a change in the essential principle of the invention. The terminology which has been used in this specification shall always be taken with broad and not limiting character.

## Claims

1. Load fixation device for trucks, trailers, semi-trailers, isothermous lorries, refrigerator lorries, containers, wagons, etc. applicable to goods **(1)** transportation, characterized in that it is set up with panels formed by vertical and horizontal bars **(2)**, susceptible of changing their length as they are telescopic type, to adapt themselves to the width and height of the concerned vehicle, existing means in the ends of the horizontal bars, as split bolts **(7)** with driving springs for its coupling with other fixed means to the inside of the mentioned vehicle, insofar as in the upper area of the vertical bars, sliding or bearing means **(4)** are included which run by rails **(9)** expressly provided, in the vehicle roof, allowing the convenient displacement of the panel in order to set up the concerned load fixation elements, preventing their involuntary displacement, providing at the ends of the vertical bars, rotating elements **(12)** to swivel the panel until its backing to the vehicle roof, in retrieval position.
In case of vehicles with dismountable roof, the guide element or upper rail **(9)** is substituted by a cable with sprigs, and a sliding means thereof adaptable to the panel, similarly having rotating elements for the swivelling into the retrieval position.

2. Load fixation device for trucks, trailers, semi-trailers, isothermous lorries, refrigerator lorries, containers, wagons, etc. applicable to goods **(1)** transportation, according to claim 1, characterized in that, between the set of vertical and horizontal bars which conform the panels, some resilient means **(8)** are located, such as cords, resilient elements or similar or simple grid panels attached to the vertical and horizontal bars, which prevent the movement of the load.

3. Load fixation device for trucks, trailers, semi-trailers, isothermous lorries, refrigerator lorries, containers, wagons, etc. applicable to goods transportation, according to claims 1 and 2, characterized in that the end of the horizontal bars **(2)** of the device, is equipped with slip bolts **(7)** driven by springs towards the outside, for including them in the fixation means located in the internal surfaces of the concerned vehicle, determining in each case the working condition thereof.

4. Load fixation device for trucks, trailers, semi-trailers, isothermous lorries, refrigerator lorries, containers, wagons, etc. applicable to goods transportation, according to claims 1 to 3, characterized in that the vertical bars of the device **(3)** can be telescopic type with internal spring to adapt the height of the device to the concerned vehicle, as well as they are equipped with anchoring means **(20)** for these bars in the adequate position in each case.

5. Load fixation device for trucks, trailers, semi-trailers, isothermous lorries, refrigerator lorries, containers, wagons, etc. applicable to goods transportation, according to claims 1 to 4, characterized in that it has available in a lateral side of the concerned vehicle, a guide rail of vertical and internal track **(53)** and another horizontal or external one, where a sliding or bearing system runs mounted in a trolley **(50)** located at the end of some back to back pieces to the end vertical bar of the device, with two bearings, one of them is included in the internal track, the other one supports the external one, co-operating to the displacement of the whole device along the vehicle for working position.

6. Load fixation device for trucks, trailers, semi-trailers, isothermous lorries, refrigerator lorries, containers, wagons, etc. applicable to goods transportation, according to claims 1 to 5, characterized in that there is a roll-up device **(33)** in the upper area of the device, where an insulating material surface **(30)** can be retrieved or extended, with clasps **(32)** or any lateral fixation means, to set up cold isolated compartment.

7. Load fixation device for trucks, trailers, semi-trailers, isothermous lorries, refrigerator lorries, containers, wagons, etc. applicable to goods transportation, according to claims 1 to 6, characterized in that some rigid panels **(39)** of insulating material have been provided, coupled by means of hooks to the horizontal bars of the device, which panels have in their upper and lower areas articulated bands by means of a hinged system **(42)** to be able to fold themselves on the central area, decreasing the total height of the panel during the displacements for its placing in the appropriate site, without any rubbing on the roof and floor of the vehicle, having fixation means for the folded bands when they are in folded position, and insulating and resilient profiles **(45)** in the peripheral edges of the whole set for a total sealing of the chamber formed by these panels.

8. Load fixation device for trucks, trailers, semi-trailers, isothermous lorries, refrigerator lorries, containers, wagons, etc. applicable to goods transportation, according to claims 1 to 7, characterized in that it can be coupled to the load fixation bar **(2)** a band or tensioning material that will have coupled a tensioning device and a fixation device. The fixation and passing device can be secured to the fixation bar or can be dismountable.

9. Load fixation device for trucks, trailers, semi-trailers, isothermous lorries, refrigerator lorries, containers, wagons, etc. applicable to goods transportation, according to claims 1 to 8, characterized in that the load fixation device is retrieved in a coupling, which will have a protection device against hits to prevent the damage of the load fixation device.

10. Load fixation device for trucks, trailers, semi-trailers, isothermous lorries, refrigerator lorries, containers, wagons, etc. applicable to goods transportation, according to claim 1 to 9, characterized in that the load fixation device can be taken out from the sliding guide element and be coupled to the rotating devices to take advantage of all the height and load capacity and after loading, to be able to couple the device on its guiding element and carry out its fixation function.
